# EUROPÄISCHE PATENTSCHRIFT

(11) **EP 1 933 410 B1**
(45) Veröffentlichungstag und Bekanntmachung des Hinweises auf die Patenterteilung: **07.03.2012**
(21) Anmeldenummer: 07033562.5
(22) Anmeldetag: 19.11.2007
(51) Int. Cl.: H01M 8/04, H01M 8/24

(54) **Wiederholeinheit für einen Brennstoffzellenstapel**
Fuel cell unit for a fuel cell stack
Élément de pile à combustible pour un empilement de piles à combustible

(30) Priorität: 11.12.2006 DE 102006058295
(43) Veröffentlichungstag der Anmeldung: 18.06.2008
(73) Patentinhaber: Staxera GmbH, 01237 Dresden (DE)
(72) Erfinder: Lawrence, Jeremy, 01277 Dresden (DE); Wunderlich, Christian, 09114 Chemnitz (DE)
(74) Vertreter: Schumacher & Willsau

(56) Entgegenhaltungen:
- EP-A- 1 701 402
- DE-A1- 4 333 478
- US-A- 5 549 983
- US-A1- 2005 142 425
- US-B1- 6 432 567

## Beschreibung

Die Erfindung betrifft eine Multi-Brennstoffzellenstapel-Anordnung mit einer Mehrzahl von Brennstoffzellenstapeln, wobei jeder Brennstoffzellenstapel zumindest eine Wiederholeinheit umfasst und die zumindest eine Wiederholeinheit jedes Brennstoffzellenstapels ein Kathoden-Flow-Field aufweist, das von einer Dichtung umgeben ist, wobei innerhalb der Dichtung zumindest eine Kathodenluftzuführung zum Zuführen von Kathodenzuluft oder eine Kathodenluftabführung zum Abführen von Kathodenabluft vorgesehen ist, wobei die Dichtung in ihrem Umfangsbereich zumindest einen definierten Undichtigkeitsbereich aufweist, durch den zusätzlich Kathodenluft zu- oder abgeführt werden kann. Beispielsweise planare SOFC-Brennstoffzellenstapel umfassen in der Regel eine Mehrzahl von Wiederholeinheiten, die jeweils eine Brennstoffzelle bilden, zwischen den jeweiligen Elementen angeordnete Dichtungen sowie einen Satz Endplatten und Stromabnehmerplatten. Es sind beispielsweise SOFC-Brennstoffzellenstapel bekannt, bei denen die einzelnen Lagen von Zellen und Interkonnektor- beziehungsweise Bipolarplatten miteinander verklebt sind, beispielsweise durch Glaspaste. Weiterhin sind SOFC-Brennstoffzellenstapel bekannt, deren Interkonnektor- beziehungsweise Bipolarplatten durch metallische Blechkassetten gebildet sind. Alternativ hierzu ist es ebenfalls bekannt, die Interkonnektor- beziehungsweise Bipolarplatten von SOFC-Brennstoffzellenstapeln aus homogenem Material vergleichsweise dick herzustellen, damit das Material mittels geeigneter Oberflächenstruktur ein Anoden-Flow-Field und ein Kathoden-Flow-Field bilden kann (unter einem Flow-Field wird im Zusammenhang mit Brennstoffzellen eine Gasverteilungsstruktur verstanden, mit der es möglich ist, einer flächigen Brennstoffzellenelektrode Brenngas oder Luft zuzuführen).

Insbesondere SOFC-Brennstoffzellen benötigen für eine entsprechend hohe elektrische Leistung eine ausreichende Betriebstemperatur (entsprechend der Stärke und Materialbeschaffenheit des verwendeten Elektrolyts). In Verbindung mit der elektrischen Energie wird gleichzeitig thermische Energie erzeugt, die aus der Brennstoffzelle beziehungsweise dem Brennstoffzellenstapel geführt werden muss, wobei eine Leistungsabgabe über Wärmeleitung in Festkörpern, konvektiv über Kühlluft oder über Wärmeabstrahlung von der Oberfläche des Brennstoffzellenstapels möglich ist. Brennstoffzellenbereiche mit zu geringer Temperatur im Festkörper liefern eine geringere elektrische Leistung und eine geringere Wärmeleistung. Daher ist eine möglichst optimale Temperaturgleichverteilung eine Voraussetzung für eine hohe Leistungsdichte eines Brennstoffzellenstapels. Die Brennstoffzellenstapel benötigen für einen Betrieb bei einer annähernden Temperaturgleichverteilung innerhalb einer Ebene eine hohe thermische Leitfähigkeit der Interkonnektor- beziehungsweise Bipolarplatten. Dies wird beim Stand der Technik häufig durch Bipolarplattenwerkstoffe mit einer hohen thermischen Leitfähigkeit und entsprechender Materialstärke realisiert. Über eine ausreichende Dicke aufweisende Bipolarplatten kann die Wärme in Randbereiche transportiert beziehungsweise über die gesamte Fläche gleichmäßig an Kühlluft abgegeben werden. Insbesondere Brennstoffzellenstapel mit leichten, kostengünstigen Bipolarplatten beziehungsweise -blechen weisen mit Abstand geringere thermische Leitfähigkeiten auf. Deshalb können derartige Brennstoffzellenstapel entweder nur mit einer deutlich geringeren Leistung betrieben werden, wobei Wärme noch verteilt und abgeführt, das Zellleistungspotenzial aber nicht ausgenutzt werden kann, oder es muss eine massive Überhitzung des Brennstoffzellenstapelkerns akzeptiert werden, um eine treibende Kraft für den Wärmetransport in den Rand des Brennstoffzellenstapels bereitzustellen. Eine derartige massive Überhitzung des Brennstoffzellenstapelkerns führt jedoch über lokal unterschiedliche thermische Ausdehnungen der Werkstoffe zu Verformungen/Spannungen und zu Frühausfällen, insbesondere nach Last- oder Thermozyklen. Es wurde bereits vorgeschlagen, in derartigen Brennstoffzellenstapeln zusätzliche Elemente zum Wärmeabtransport vorzusehen, beispielsweise Stäbe aus Werkstoffen mit sehr guter Wärmeleitfähigkeit oder so genannte Heat-Pipes. Weiterhin wurde bereits vorgeschlagen, nach einer geringeren Anzahl von Wiederholeinheiten zusätzliche wärmeleitende Platten zur Vergleichmäßigung der Temperatur und zum Kühlen des Brennstoffzellenstapels zu integrieren.

Trotz der Vielzahl der teilweise mit erheblichen Kosten verbundenen bekannten Maßnahmen zur Erzielung einer möglichst gleichmäßigen Temperaturverteilung innerhalb eines Brennstoffzellenstapels oder innerhalb einer Multi-Brennstoffzellenstapel-Anordnung ist dieses Problem noch immer nicht zufrieden stellend gelöst.

In der US 5,549,981 wird eine Multi-Brennstoffzellenstapel-Anordnung mit mehreren Brennstoffzellenstapeln mit Wiederholeinheiten gezeigt. Bei der gezeigten Anordnung erfolgt die Reaktantenzu- und -abfuhr nach Art einer Parallelschaltung, wobei den Kathoden der unterschiedlichen Brennstoffzellenstapel Kathodenluft zugeführt wird, die eine in etwa einheitliche Temperatur aufweist.

Der Erfindung liegt daher die Aufgabe zugrunde, in kostengünstiger Weise eine bessere Einflussnahme auf die Temperaturverteilung in einer Multi-Brennstoffzellenstapel-Anordnung zu ermöglichen.

Diese Aufgabe wird durch die Merkmale des unabhängigen Anspruchs gelöst.

Vorteilhafte Ausgestaltungen und Weiterbildungen der Erfindung ergeben sich aus den abhängigen Ansprüchen.

Die erfindungsgemäße Multi-Brennstoffzellenstapel-Anordnung mit einer Mehrzahl von Brennstoffzellenstapeln baut auf dem gattungsgemäßen Stand der Technik dadurch auf, dass zumindest zwei definierte Undichtigkeitsbereiche von benachbarten Brennstoffzellenstapeln so miteinander ausgerichtet sind, dass aus dem einen Brennstoffzellenstapel über den einen definierten Undichtigkeitsbereich austretende Kathodenluft dem anderen Brennstoffzellenstapel über den anderen definierten Undichtigkeitsbereich zugeführt werden kann. Auf diese Weise kann in vorteilhafter Weise auf die Temperaturverteilung innerhalb der gesamten Anordnung Einfluss genommen werden.

Besonders vorteilhaft kann es dabei sein, wenn die Anordnung so ausgelegt ist, dass die aus dem einen Brennstoffzellenstapel über den einen definierten Undichtigkeitsbereich austretende Kathodenluft dem anderen Brennstoffzellenstapel über einen Bereich zugeführt werden kann, der mit einer Frischluftquelle in Verbindung steht. Beispielsweise können zu diesem Zweck zumindest zwischen einigen der Brennstoffzellenstapel Frischluftkanäle vorgesehen sein. Im einfachsten Fall lassen sich solche Kanäle durch geeignete Beabstandung der einzelnen Brennstoffzellenstapel bilden. Für eventuell zusätzlich oder alternativ vorgesehene Abluftkanäle gilt Vorstehendes analog.

Dadurch, dass die Dichtung der Wiederholeinheit in ihrem Umfangsbereich zumindest einen definierten Undichtigkeitsbereich aufweist, durch den zusätzlich Kathodenluft zu- oder abgeführt werden kann, ergibt sich die Möglichkeit, an besonders heißen Bereichen des Brennstoffzellenstapels gezielt heißes Gas, insbesondere heiße Kathodenabluft, abzuführen und/oder solchen Stellen gezielt besonders kühles Gas, insbesondere Kathodenzuluft zuzuführen. Es ist besonders vorteilhaft, wenn sich die definierten Undichtigkeitsbereiche einfach konfigurieren lassen, beispielsweise durch ein Bearbeiten von Dichtungsrohlingen oder ein Vorsehen von unterschiedlichen Dichtungen.

Eine bevorzugte Weiterbildung der erfindungsgemäßen Multi-Brennstoffzellenstapel-Anordnung sieht vor, dass die Wiederholeinheit jedes Brennstoffzellenstapels zwei sich gegenüberliegende definierte Undichtigkeitsbereiche zum Abführen von Kathodenabluft aufweist. Auf diese Weise lassen sich in einfacher Weise symmetrische Strömungsverhältnisse innerhalb der Wiederholeinheit erzeugen, was beispielsweise dazu genutzt werden kann, die Kathodenluft im Wesentlichen zwischen zwei sich gegenüberliegenden Stirnseiten strömen zu lassen, die von den beiden Seiten zu einem Rechteck ergänzt werden, die die beiden definierten Undichtigkeitsbereiche aufweisen.

Zusätzlich oder alternativ kann bei der erfindungsgemäßen Multi-Brennstoffzellenstapel-Anordnung vorgesehen sein, dass die Wiederholeinheit jedes Brennstoffzellenstapels zwei sich gegenüberliegende definierte Undichtigkeitsbereiche zum Zuführen von Kathodenzuluft aufweist. Auch in diesem Fall lassen sich symmetrische Strömungsverhältnisse erzeugen.

Die Erfindung kann beispielsweise unter Verwendung eines planaren SOFC-Brennstoffzellenstapels verwirklicht werden, wobei aus einer SOFC-Brennstoffzelle einer Bipolarplatte, Kontaktierungselementen der Anoden- und Kathodenseite sowie Flachdichtungen bestehende Wiederholeinheiten entsprechend der angestrebten Ebenenzahl übereinander gestapelt werden. Dabei kann der Luftfluss auf der Kathodenseite durch den Brennstoffzellenstapel alternierend von Ebene zu Ebene versetzt erfolgen und die Wiederholeinheiten können aus identischen Elementen aufgebaut sein. Vorzugsweise erfolgt der Luftfluss durch einfach herstellbare Öffnungen/Verschlüsse in den Flachdichtungselementen beziehungsweise durch Öffnungen die durch die Dichtungsform definiert werden. Weiterhin kann vorgesehen sein, dass die Elektrolytfolie der einzelnen Brennstoffzellen beziehungsweise der einzelnen MEAs gegenüber der aktiven Fläche vergrößert und mit Durchbrüchen für die Gasführung versehen ist. Als besonders vorteilhaft wird es erachtet, wenn der Gasfluss auf der Anoden- und der Kathodenseite durch Kontaktelemente identischen Aufbaus unabhängig von der Flussrichtung der Gase erfolgt und der Bauraum für die Gasströmung durch eine Änderung der Höhe der Flachdichtungselemente und eine entsprechende Änderung der Höhe der Kontaktelemente erfolgt. Es kann auch vorteilhaft sein, dass der Gasfluss auf der Anoden- und Kathodenseite durch Kontaktelemente identischen Aufbaus aber in Abhängigkeit von der Flussrichtung alternierend von der Flussrichtung der Gase erfolgt und der Bauraum für die Gasströmung allein durch eine Änderung der Höhe der Flachdichtungselemente und eine entsprechende Änderung der Höhe der Kontaktelemente erfolgt. Es kommen sowohl Ausführungsformen in Betracht, bei denen Gasaustrittsöffnungen seitlich, senkrecht zur Gaseintrittsrichtung angeordnet sind, als auch Ausführungsformen, bei denen Gaseintrittsöffnungen seitlich senkrecht zur Gasaustrittsrichtung angeordnet sind. Im Rahmen der Erfindung kommen weiterhin insbesondere SOFC-Brennstoffzellenstapel in Betracht, bei denen die Bauhöhen auf der Kathodenseite oder die Materialstärke der Bipolarplatten mit der Bauhöhe variieren, um einen thermisch optimierten Betrieb des Brennstoffzellenstapels zu ermöglichen.

Im Hinblick auf erfindungsgemäße Multi-Brennstoffzellenstapel-Anordnungen, die aus Brennstoffzellenstapeln aufgebaut sind, kann vorgesehen sein, dass diese gruppenweise so angeordnet werden, dass die Zufuhr von Kühlluft für einen Brennstoffzellenstapel vollständig oder teilweise aus der ausgetretenen Luft eines seitlich daneben liegenden beziehungsweise davor liegenden Brennstoffzellenstapels erfolgt und die Brennstoffzellenstapel über diese Anordnung der Brennstoffzellenstapel zu Multi-Brennstoffzellenstapel-Anordnungen verschaltet werden können. Dabei kann vorgesehen sein, dass die Luftzufuhr teilweise über Kanäle zwischen den einzelnen Brennstoffzellenstapeln erfolgt, wodurch der Brennstoffzellenstapelverbund thermisch optimiert betrieben werden kann. Eine in diesem Zusammenhang weiterhin mögliche Ausgestaltung sieht vor, dass zumindest einige der Interkonnektor- beziehungsweise Bipolarplattenbleche zwischen den einzelnen Brennstoffzellenstapeln so gestaltet sind, dass die Bipolarplattenbleche insbesondere in den heißeren Zonen als Kühlfinnen in die Luftkanäle gezogen werden.

Im Rahmen der Erfindung ist es möglich, dass die Bipolarplatten einteilig ausgeführt werden, vorzugsweise so, dass weniger als 50 % der Materialkosten für eine kassettenartige, doppelwandige Bipolarplattenlösung anfallen. Durch eine beidseitige Verklebung können eventuelle Differenzen im thermischen Ausdehnungskoeffizienten zwischen der eigentlichen Brennstoffzelle und der Bipolarplatte so in Druck- beziehungsweise Zugspannungen der Platten umgewandelt werden, dass eine Verbiegung verhindert (symmetrischer Schichtaufbau) und eine höhere Stabilität über viele Thermozyklen erreicht wird. Es ergibt sich eine Vielzahl von Gestaltungsmöglichkeiten zum thermisch optimierten Brennstoffzellenstapelbetrieb (alternierende Luftführung, unterschiedliche Stärke der Bipolarplatten, unterschiedliche Bauhöhen für Anoden und Kathoden) ohne dass auf das vorteilhafte Konzept gleicher oder zumindest nahezu gleicher Bauteile verzichtet werden muss.

Beispielsweise die thermische Situation in einem SOFC-Brennstoffzellenstapel wird entscheidend von der örtlich erzeugten elektrischen Leistung, der im Zusammenhang damit erzeugten Wärmemenge und dem Abtransport dieser Wärmemenge aus der Reaktionszone über Wärmeleitung und der Wärmeabstrahlung von den Brennstoffzellenoberflächen bestimmt. Die Erfindung bietet unter anderem die Möglichkeit, dieses Temperaturmanagement sowohl in einem einzelnen Brennstoffzellenstapel als auch in einer Multi-Brennstoffzellenstapel-Anordnung über die Variation der Parameter Bauhöhe und Bipolarplatten-Materialstärke an die Situation beispielsweise in einer so genannten Hotbox (thermisch isolierter Bereich, in dem hohe Temperaturen erzeugende Bauteile eines Gesamtsystems konzentriert werden) anzupassen.

Bevorzugte Ausführungsformen der Erfindung und Beispiele für Wiederholeinheiten werden nachfolgend anhand der zugehörigen Zeichnungen beispielhaft erläutert.

Es zeigen:
- Figur 1: eine schematische Schnittansicht von zwei Wieder- holeinheiten eines Brennstoffzellenstapels;
- Figur 2A: eine schematische Draufsicht auf ein erstes Bei- spiel für eine Wiederholeinheit für einen Brenn- stoffzellenstapel, und zwar auf die obere Wieder- holeinheit von Figur 1;
- Figur 2B: eine schematische Draufsicht auf ein zweites Bei- spiel für eine Wiederholeinheit für einen Brenn- stoffzellenstapel, und zwar auf die untere Wie- derholeinheit von Figur 1;
- Figur 3A: eine schematische Draufsicht auf ein drittes Bei- spiel für eine Wiederholeinheit für einen Brenn- stoffzellenstapel;
- Figur 3B: eine schematische Draufsicht auf ein viertes Bei- spiel für eine Wiederholeinheit für einen Brenn- stoffzellenstapel;
- Figur 4A: eine schematische Draufsicht auf ein fünftes Bei- spiel für eine Wiederholeinheit für einen Brenn- stoffzellenstapel;
- Figur 4B: eine schematische Draufsicht auf ein sechstes Beispiel für eine Wiederholeinheit für einen Brennstoffzellenstapel;
- Figur 5: eine schematische Draufsicht einer ersten Ausfüh- rungsform einer Multi-Brennstoffzellenstapel- Anordnung;
- Figur 6: eine schematische Draufsicht einer zweiten Aus- führungsform einer Multi-Brennstoffzellenstapel- . Anordnung;
- Figur 7A: eine schematische Darstellung einer im Rahmen der Erfindung verwendbaren MEA (Membrane Electrode Assembly);
- Figur 7B: einen Randbereich der Kathodenseite der MEA von Figur 7A mit zugehöriger Glasdichtung;
- Figur 7C: einen Randbereich der Anodenseite der MEA von Fi- gur 7A mit zugehöriger Glasdichtung;
- Figur 8A: eine Draufsicht auf die Anodenseite der MEA von Figur 7A mit zugehöriger Glasdichtung und zugehö- riger Gasverteilungsstruktur (Flow-Field); und
- Figur 8B: eine Draufsicht auf die Kathodenseite der MEA von Figur 7A mit zugehöriger Glasdichtung und zugehöriger Gasverteilungsstruktur (Flow-Field).

In den Figuren bezeichnen gleiche oder ähnliche Bezugszeichen (zum Beispiel um einen Betrag von 100 versetzte Bezugszeichen) gleiche oder ähnliche Komponenten, die zur Vermeidung von Wiederholungen zumindest teilweise nur einmal erläutert werden.

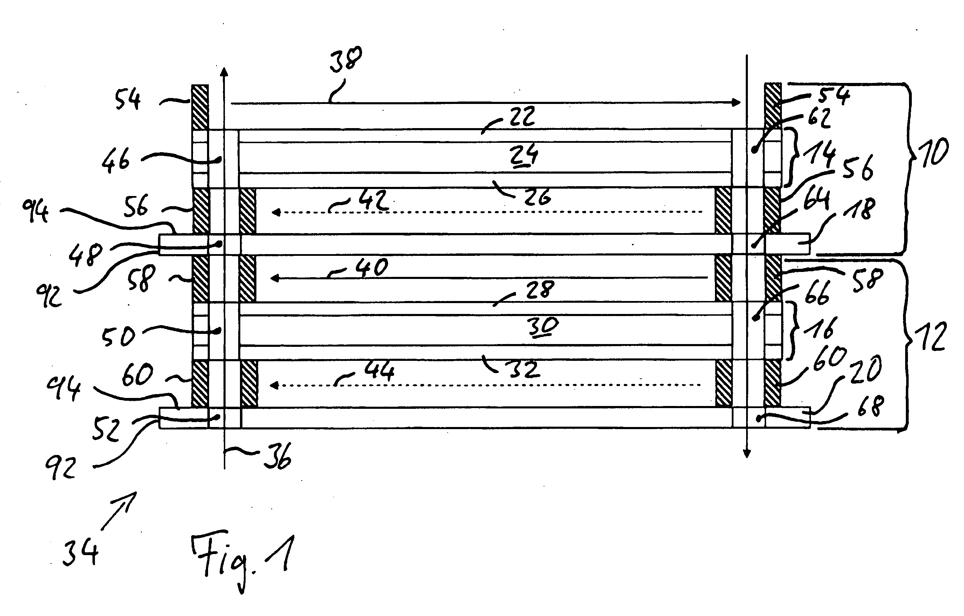

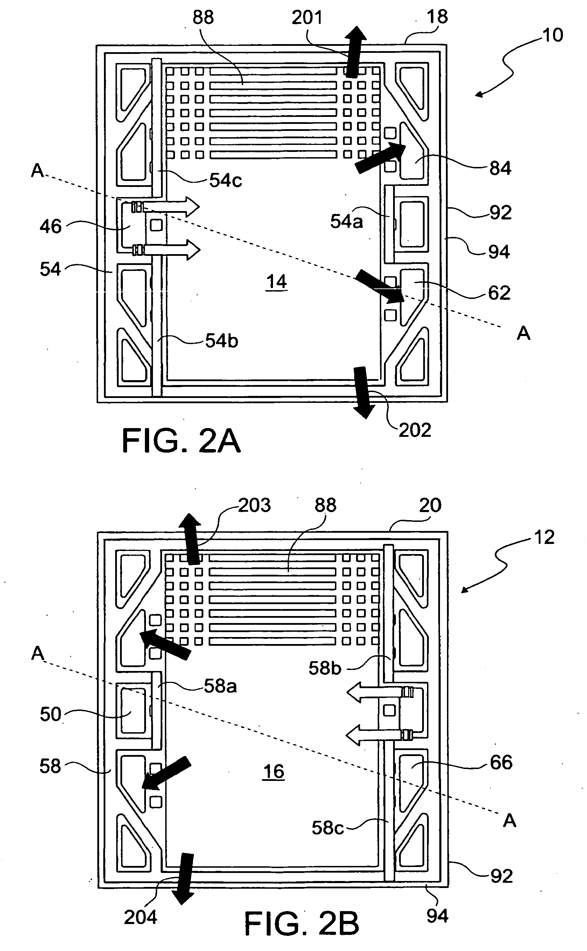

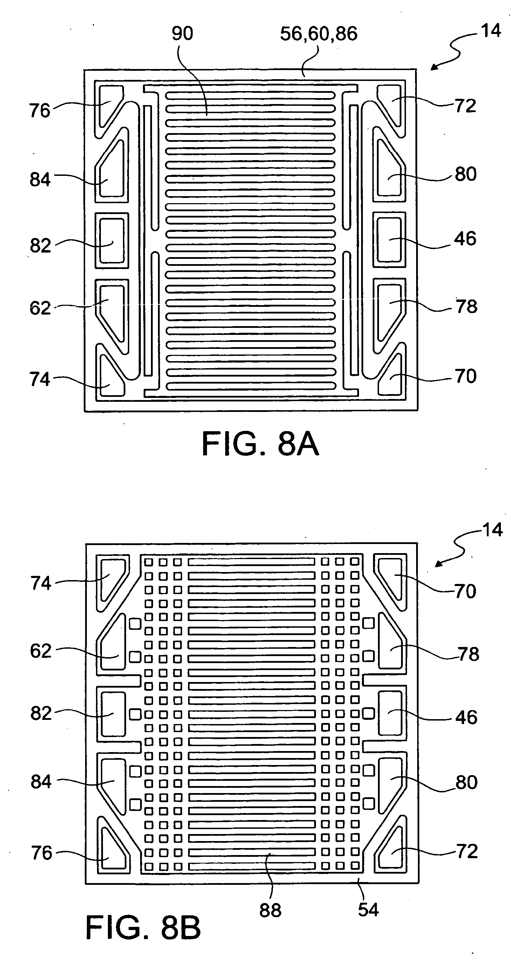

Figur 1 zeigt eine schematische Schnittansicht entlang den in den Draufsichten von Figur 2A und Figur 2B gezeigten Schnittlinien A-A, wobei die Draufsicht auf die in Figur 1 oben dargestellte Wiederholeinheit 10 in Figur 2A und die Draufsicht auf die in Figur 1 unten dargestellte Wiederholeinheit 12 in der Figur 2B dargestellt ist. Die Wiederholeinheit 10 umfasst eine Bipolarplatte 18 und eine MEA 14 mit einer Kathode 22, einer Elektrolytschicht 24 und einer Anode 26. Die Bipolarplatte 18 und die MEA 14 weisen in ihren Randbereichen eine Mehrzahl von Gaszu- und -abführöffnungen auf, die jeweils miteinander ausgerichtet sind und die später insbesondere anhand von Figur 7A noch näher beschrieben werden. In Figur 1 sind von diesen Gaszu- und - abführöffnungen beziehungsweise -durchbrüchen hinsichtlich der Bipolarplatte 18 nur die Durchbrüche 48 und 64 und hinsichtlich der MEA 14 nur die Durchbrüche 46 und 62 zu erkennen. Zwischen der Bipolarplatte 18 und der MEA 14 ist eine Anodendichtung 56 vorgesehen, die die Durchbrüche 46, 48, 62, 64 hinsichtlich der Anode 26 verschließt. Das wasserstoffhaltige Brenngas 42 wird über in Figur 1 nicht zu erkennende Anodengaszuführöffnungen und Anodengasabführöffnungen zu- beziehungsweise abgeführt. Der Aufbau der Anodendichtung 56 ist insbesondere in Figur 8A zu erkennen, auf die später noch näher eingegangen wird.

Die Wiederholeinheit 12 weist eine mit der Bipolarplatte 18 baugleiche Bipolarplatte 20 und eine mit der MEA 14 baugleiche MEA 16 auf. Von deren Gaszu- und Gasabführöffnungen sind in Figur 1 nur die Öffnungen 50, 52, 66, 68 zu erkennen. Die MEA 16 umfasst eine Kathode 28, eine Elektrolytschicht 30 und eine Anode 32, wobei zwischen der Anode 32 und der Bipolarplatte 20 eine Anodendichtung 60 vorgesehen ist, deren Konfiguration identisch zu der der Anodendichtung 56 ist. Der Anode 32 wird wasserstoffhaltiges Brenngas 44 in der gleichen Strömungsrichtung zugeführt wie der Anode 26 (die Kathoden-Flow-Field-Struktur 88 und die Anoden-Flow-Field-Struktur 90, die insbesondere in den Figuren 8A und 8B gut zu erkennen sind, sind der Übersichtlichkeit halber in Figur 1 nicht dargestellt). Des Weiteren ist zu erkennen, dass die Bipolarplatten 18, 20 eine größere Breite als die MEAs 14, 16 aufweisen. Somit ergibt sich zwischen dem Oberflächenrand 92 und der jeweiligen Dichtung 56, 58 beziehungsweise 60 ein Oberflächenabschnitt 94, der als Kühlkörper wirken kann.

Wie dies sowohl Figur 1 als auch einem Vergleich der Figuren 2A und 2B zu entnehmen ist, verläuft die Strömungsrichtung der der Kathode 22 zugeführten Kathodenluft 38 entgegengesetzt zu der Strömungsrichtung der der Kathode 28 zugeführten Kathodenluft 40. Da sich die Kathodenluft in Strömungsrichtung erwärmt, führt diese Konfiguration dazu, dass heiße und kalte Bereiche im Brennstoffzellenstapel direkt übereinander liegen, wodurch ein Temperaturausgleich in senkrechter Richtung (also in Stapelrichtung) stattfindet. Dies führt zu einer gleichmäßigeren Temperaturverteilung innerhalb des Brennstoffzellenstapels. Die unterschiedlichen Kathodenluftströmungsrichtungen ergeben sich aus den unterschiedlichen Konfigurationen der Dichtungen 54 und 58, wie dies besonders gut durch einen Vergleich der Figuren 2A und 2B zu erkennen ist. Zwar weisen beide Dichtungen 54, 58 den gleichen Grundaufbau auf, der insbesondere in Figur 8B zu erkennen ist. Dieser Grundaufbau ist jedoch durch zusätzliche Dichtungsabschnitte unterschiedlich ergänzt. Entsprechend der Darstellung von Figur 2A, ist das Dichtungsgrundelement 54 durch Dichtungsabschnitte 54a, 54b und 54c derart ergänzt, dass lediglich eine Kathodenluftströmung von dem Durchbruch 56 zu den Durchbrüchen 62 und 84 möglich ist. Wie erwähnt erwärmt sich die Kathodenluft in Strömungsrichtung, wobei heißere Luft in den Zeichnungen durchgängig mit dunkleren Pfeilen als kältere Luft gekennzeichnet ist. Gemäß Figur 2B umfasst die Dichtung 58 Ergänzungen 58a, 58b oder 58c. Dadurch wird erzwungen, dass die Kathodenluft 40 in der in Figur 2B durch die hellen und dunklen Pfeile dargestellten Weise von rechts nach links strömt. Es wird noch darauf hingewiesen, dass die das Kathoden-Flow-Field definierende stegartige Struktur 88 in den Figuren 2A und 2B (und auch in den meisten anderen Figuren) der Übersichtlichkeit halber nur abschnittsweise dargestellt ist. Der vollständige Aufbau dieser Struktur 88 ist jedoch insbesondere Figur 8B zu entnehmen.

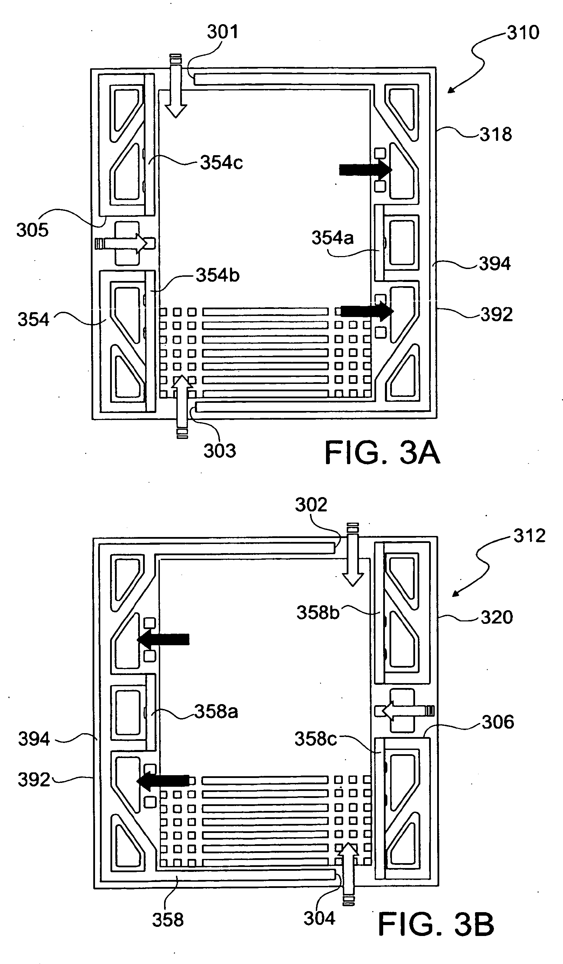

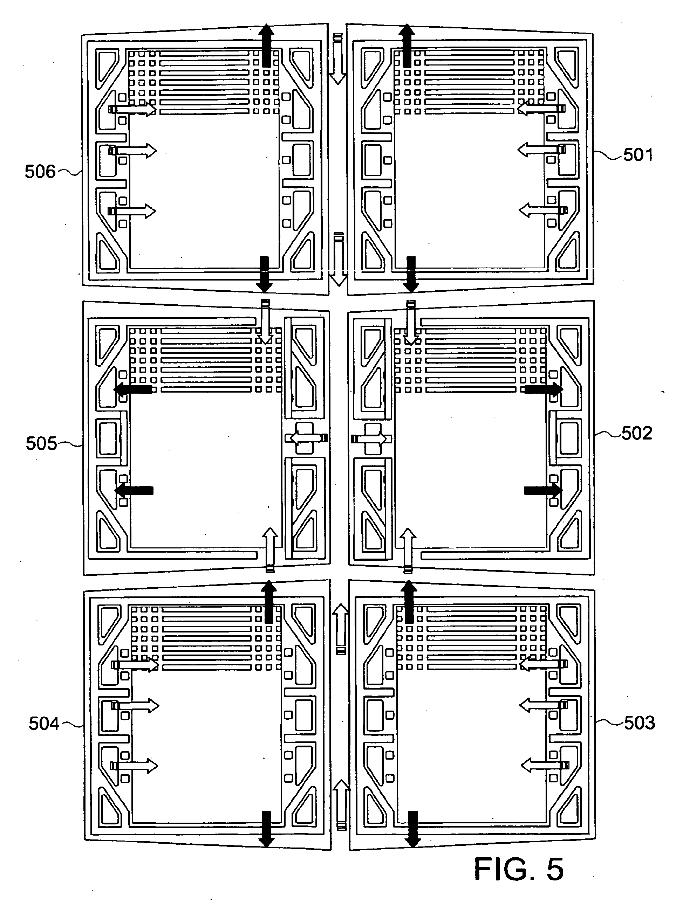

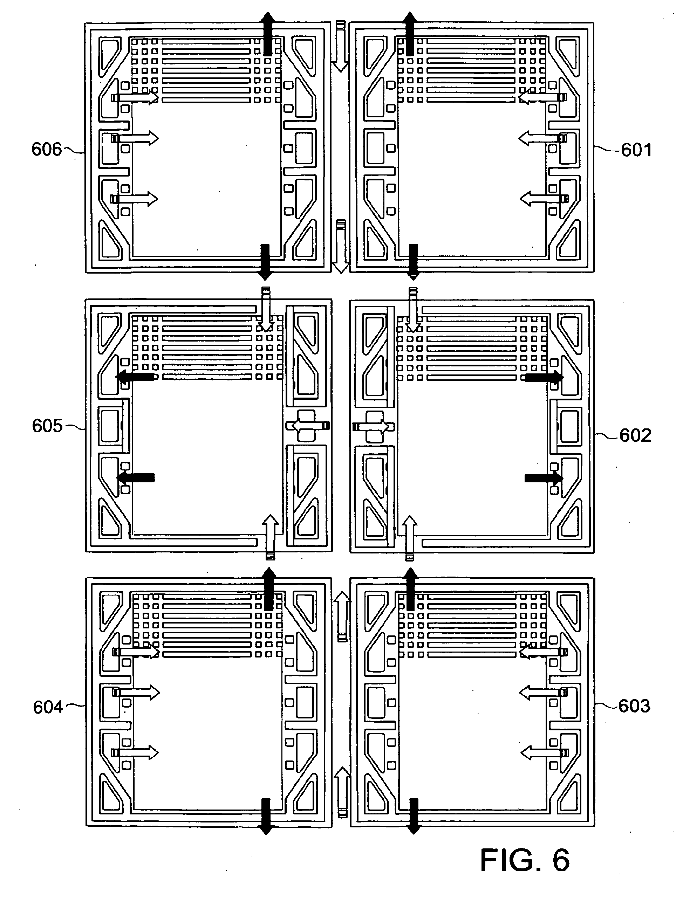

Figur 3A zeigt eine schematische Draufsicht auf ein drittes Beispiel für eine Wiederholeinheit für einen Brennstoffzellenstapel und Figur 3B zeigt eine schematische Draufsicht auf ein viertes Beispiel für eine Wiederholeinheit für einen Brennstoffzellenstapel. Der Aufbau der in den Figuren 3A und 3B dargestellten Wiederholeinheiten ähnelt dem Aufbau der in den Figuren 1 sowie 2A und 2B gezeigten Wiederholeinheiten, unterscheidet sich aber insbesondere dadurch, dass die Dichtungen 354 und 358 (im Gegensatz zu den Dichtungen 54 und 58) nicht vollständig umlaufend ausgebildet sind, sondern seitliche definierte Undichtigkeitsbereiche 301, 302, 303, 304, 305, 306 in Form von Dichtungslücken aufweisen. Dadurch ist es beispielsweise im Rahmen von Multi-Brennstoffzellenstapel-Anordnungen (siehe auch Figuren 5 und 6) möglich, über benachbart zum Brennstoffzellenstapel vorgesehene Luftkanäle kühle Kathodenluft zuzuführen (siehe helle Pfeile) die dann über Gasabfuhrdurchbrüche in den Wiederholeinheiten erwärmt abgeführt wird (siehe dunkle Pfeile).

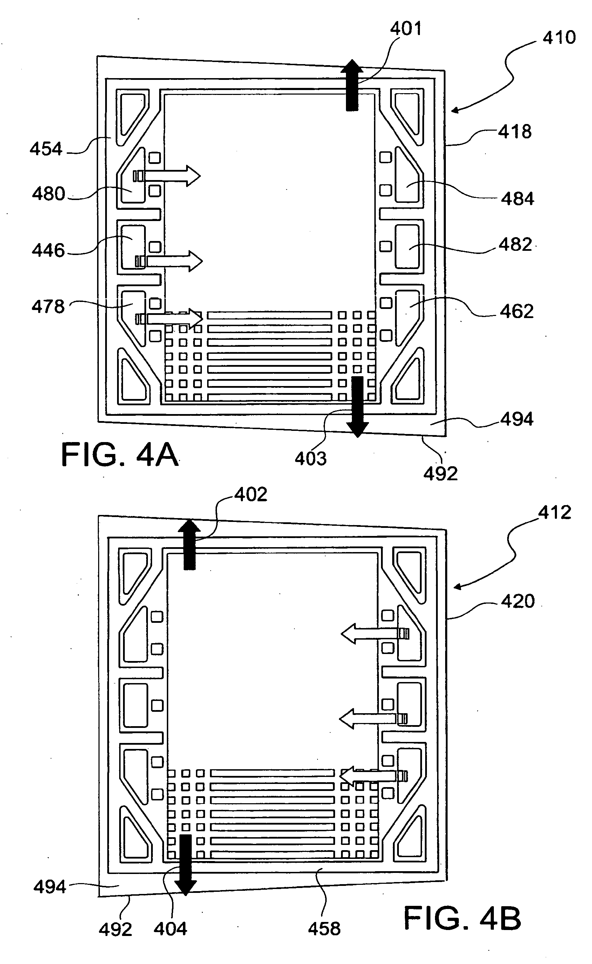

Figur 4A zeigt eine schematische Draufsicht auf ein fünftes Beispiel für eine Wiederholeinheit für einen Brennstoffzellenstapel und Figur 4B zeigt eine schematische Draufsicht auf ein sechstes Beispiel für eine Wiederholeinheit für einen Brennstoffzellenstapel. Der Aufbau der in den Figuren 4A und 4B dargestellten Wiederholeinheiten ähnelt dem Aufbau der in den Figuren 3A und 3B gezeigten Wiederholeinheiten, unterscheidet sich aber insbesondere dadurch, dass die definierten Undichtigkeitsbereiche 401, 403 im Umfangsbereich der Dichtung 454 in diesem Fall als Auslass für heiße Kathodenabluft dienen (siehe dunkle Pfeile). Die kühlere Kathodenzuluft (siehe helle Pfeile) wird in diesem Fall über drei Gaszuführdurchbrüche 480, 446, 478 zugeführt. Falls sicher vermieden werden soll, dass Kathodenabluft in die Durchbrüche 484, 482, 462 eindringt, können diese Durchbrüche durch nicht dargestellte zusätzliche Dichtungsabschnitte verschlossen werden, ähnlich wie dies in den Figuren 2A und 2B dargestellt ist. Der Aufbau der Wiederholeinheit von 4B entspricht im Wesentlichen dem Aufbau der Wiederholeinheit von Figur 4A. Allerdings weist die Bipolarplatte 418 gemäß der Darstellung von Figur 4A eine parallelogrammartige Form auf, während die Bipolarplatte 420 gemäß der Darstellung von Figur 4B trapezförmig ausgelegt ist. In beiden Fällen ergibt sich ein außerhalb der Dichtung befindlicher verbreiteter Bipolarplattenrand, der im Betrieb des Brennstoffzellenstapels die Funktion eines Kühlkörpers übernimmt. Insbesondere bei einer trapezförmigen Bipolarplatte 420 und definierten Undichtigkeitsbereichen 402, 404, die als Auslass für heiße Kathodenluft dienen, besteht die Möglichkeit, die definierten Undichtigkeitsbereiche 402, 404 wie in Figur 4B dargestellt benachbart zu den breitesten Randabschnitten vorzusehen, wo die Kühlkörperwirkung maximal ist.

Figur 5 zeigt eine schematische Draufsicht einer ersten Ausführungsform einer Multi-Brennstoffzellenstapel-Anordnung. Dargestellt sind sechs benachbart zueinander angeordnete Brennstoffzellenstapel 501 bis 506 (ohne Endplatten). Der Aufbau der obersten Wiederholeinheiten, die aufgrund der nicht dargestellten Endplatten in der Draufsicht zu erkennen sind, entspricht dem Aufbau der in Figur 4B dargestellten Wiederholeinheit. Die Bipolarplatten weisen jeweils einen trapezförmigen Aufbau auf. Dabei handelt es sich um Wiederholeinheiten mit einer Bipolarplatte, deren eine Oberfläche mit einer im Wesentlichen umlaufenden Dichtung in Verbindung steht, wobei zwischen dem Oberflächenrand und der im Wesentlichen umlaufenden Dichtung zumindest abschnittsweise ein Abstand vorgesehen ist, so dass sich zumindest ein Oberflächenabschnitt ergibt, der im Betrieb des Brennstoffzellenstapels als Kühlkörper wirkt. Der oder die als Kühlkörper wirkenden Oberflächenabschnitte können insgesamt zwischen 5 % und 50 %, vorzugsweise zwischen 10 % und 40 % und noch bevorzugter zwischen 20 % und 30 % der Oberfläche ausmachen. Zwischen den einzelnen Brennstoffzellenstapeln sind Luftkanäle vorgesehen, durch die durch helle Pfeile angedeutete Luft zugeführt wird, die zumindest kühler als die aus den Wiederholeinheiten abgeführte Kathodenabluft ist. Die aus den Brennstoffzellenstapeln 501, 503, 504 und 506 austretende, in Richtung auf die Brennstoffzellenstapel 502 und 505 strömende heiße Kathodenabluft wird in den Bereichen zwischen den Brennstoffzellenstapeln mit kühler Luft vermischt, so dass die seitlich in die Brennstoffzellenstapel 502 und 505 eintretende Luft wieder als kühlere Luft (helle Pfeile) dargestellt ist. Insgesamt ergibt sich bei der in Figur 5 dargestellten Anordnung eine gute Abführung von Wärme nach außen, so dass innerhalb der gesamten Anordnung eine relativ gleichmäßige Temperaturverteilung herrscht. Dieser Effekt wird in vorteilhafter Weise dadurch unterstützt, dass die Kathodenluft innerhalb der einzelnen Brennstoffzellenstapel 501 bis 506 jeweils hinsichtlich verschiedener Ebenen in unterschiedlichen Richtungen geführt wird. Durch eine Anordnung der sechs Brennstoffzellenstapel 501 bis 506 auf einer gemeinsamen Grundplatte zur Zufuhr von Brenngasen und zumindest eines Teils der Kathodenluft, kann ein thermisch optimierter Betrieb des Gesamtverbundes beispielsweise auch durch die Zumischung von kühlerer Frischluft erfolgen.

Figur 6 zeigt eine schematische Draufsicht einer zweiten Ausführungsform einer Multi-Brennstoffzellenstapel-Anordnung aus sechs Brennstoffzellenstapeln 601 bis 606. Diese Anordnung unterscheidet sich lediglich dadurch von der Anordnung gemäß Figur 5, dass die Bipolarplatten in diesem Fall rechteckig sind und deutlich weniger stark verbreiterte Randbereiche aufweisen, die als Kühlkörper dienen können.

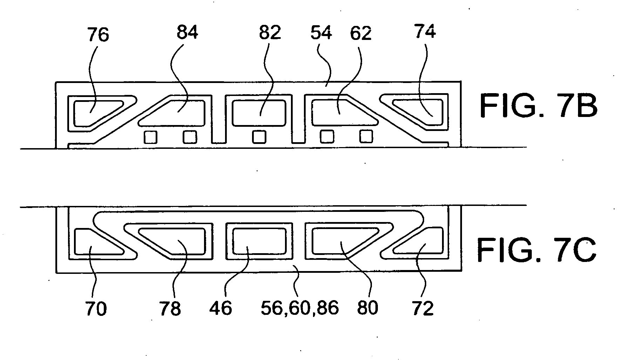

Figur 7A zeigt eine schematische Darstellung einer im Rahmen der Erfindung verwendbaren MEA (Membrane Electrode Assembly), Figur 7B zeigt einen Randbereich der Kathodenseite der MEA von Figur 7A mit zugehöriger Glasdichtung, Figur 7C zeigt einen Randbereich der Anodenseite der MEA von Figur 7A mit zugehöriger Glasdichtung, Figur 8A zeigt eine Draufsicht auf die Anodenseite der MEA von Figur 7A mit zugehöriger Glasdichtung und zugehöriger Gasverteilungsstruktur (Flow-Field) und Figur 8B zeigt eine Draufsicht auf die Kathodenseite der MEA von Figur 7A mit zugehöriger Glasdichtung und zugehöriger Gasverteilungsstruktur (Flow-Field). Es ist zu erkennen, dass die MEA 14 insgesamt zehn Durchbrüche oder Öffnungen 46, 62, 70, 72, 74, 76, 78, 80, 82 und 84 aufweist, die zur Zu- und Abführung von Gasen verwendet werden können (die in den in Rede stehenden Figuren nicht dargestellten Bipolarplatten weisen entsprechende Öffnungen auf, damit sich in Stapelrichtung durch den Brennstoffzellenstapel verlaufende Gaskanäle bilden lassen). Aufgrund der Tatsache, dass die Anodendichtung 86, die Anoden-Flow-Field-Struktur beziehungsweise die entsprechenden Aufbau- und Kontaktierungselemente 90, die Kathoden-Dichtung 54 und die Kathoden-Flow-Field-Struktur beziehungsweise die entsprechenden Aufbau- und Kontaktierungselemente 88 auf die MEA 14 aufgebracht werden können (aber nicht müssen), ist es möglich sehr einfache Bipolarplatten einzusetzen. Es können nämlich Interkonnektor- beziehungsweise Bipolarplattenbleche in kassettenlosem Design beziehungsweise mit einschichtigem Aufbau verwendet werden, wodurch die Masse, die Bauhöhe und die Kosten gesenkt werden können. Beispielsweise können Bipolarplatten in Form von ausgeschnittenen oder ausgestanzten Blechen verwendet werden, ohne dass Präge- oder Schweißoperationen erforderlich sind. Die Aufbau- und Kontaktierungselemente 88, 90 der einzelnen Brerinstoffzellen können dabei insbesondere die folgenden Funktionen haben:
- Großflächige und planparallele Abstützung der Zelle.
- Elektrische und thermische Kontaktierung der Zellen und Ableitung von Wärme und Strom zur Bipolarplatte.
- Möglichst flächiger Gaszutritt der Reaktionsgase zur Zelloberfläche.
- Strömungsführung der Gase in der Fläche bei minimalen Druckverlusten.

Die Aufbau- und Kontaktierungselemente können aus zu diesem Zweck an sich bekannten Werkstoffen aufgebaut werden. Beispielsweise können für die Anodenseite Stahl oder Nickel und für die Kathodenseite Stahl oder keramische Kontaktpaste verwendet werden. Dabei können sowohl massive Stege/Elemente als auch poröse Schäume, Faservliese oder ähnliche Strukturen eingesetzt werden. Die Erfindung bietet hier, ebenso wie bei der Anzahl, Größe und Anordnung der Gaszu- und -abführöffnungen eine große Gestaltungsfreiheit, wobei die Gasführung in der Ebene einer optimierten Strömungsführung entsprechen kann.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Wiederholeinheit
- 12: Wiederholeinheit
- 14: MEA
- 16: MEA
- 18: Bipolarplatte
- 20: Bipolarplatte
- 22: Kathode
- 24: Elektrolytschicht
- 26: Anode
- 28: Kathode
- 30: Elektrolytschicht
- 32: Anode
- 34: Brennstoffzellenstapel
- 36: Kathodenluft
- 38: Kathodenluft
- 40: Kathodenluft
- 42: Anodenbrenngas
- 44: Anodenbrenngas
- 46: Gasdurchtrittsöffnung
- 48: Gasdurchtrittsöffnung
- 50: Gasdurchtrittsöffnung
- 52: Gasdurchtrittsöffnung
- 54: Kathodendichtung
- 54a: Kathodendichtungsergänzung
- 54b: Kathodendichtungsergänzung
- 54c: Kathodendichtungsergänzung
- 56: Anodendichtung
- 58: Kathodendichtung
- 58a: Kathodendichtungsergänzung
- 58b: Kathodendichtungsergänzung
- 58c: Kathodendichtungsergänzung
- 60: Anodendichtung
- 62: Gasdurchtrittsöffnung
- 64: Gasdurchtrittsöffnung
- 66: Gasdurchtrittsöffnung
- 68: Gasdurchtrittsöffnung
- 70: Gasdurchtrittsöffnung
- 72: Gasdurchtrittsöffnung
- 74: Gasdurchtrittsöffnung
- 76: Gasdurchtrittsöffnung
- 78: Gasdurchtrittsöffnung
- 80: Gasdurchtrittsöffnung
- 82: Gasdurchtrittsöffnung
- 84: Gasdurchtrittsöffnung
- 86: Anodendichtung
- 88: Kathoden-Flow-Field-Struktur
- 90: Anoden-Flow-Field-Struktur
- 92: Oberflächenrand
- 94: Kühlkörper-Oberflächenabschnitt
- 301: Definierter Undichtigkeitsbereich
- 302: Definierter Undichtigkeitsbereich
- 303: Definierter Undichtigkeitsbereich
- 304: Definierter Undichtigkeitsbereich
- 305: Definierter Undichtigkeitsbereich
- 306: Definierter Undichtigkeitsbereich
- 310: Wiederholeinheit
- 312: Wiederholeinheit
- 318: Bipolarplatte
- 320: Bipolarplatte
- 354: Kathodendichtung
- 354a: Kathodendichtungsergänzung
- 354b: Kathodendichtungsergänzung
- 354c: Kathodendichtungsergänzung
- 358: Kathodendichtung
- 358a: Kathodendichtungsergänzung
- 358b: Kathodendichtungsergänzung
- 392: Oberflächenrand
- 394: Kühlkörper-Oberflächenabschnitt
- 401: Definierter Undichtigkeitsbereich
- 402: Definierter Undichtigkeitsbereich
- 403: Definierter Undichtigkeitsbereich
- 404: Definierter Undichtigkeitsbereich
- 410: Wiederholeinheit
- 412: Wiederholeinheit
- 418: Bipolarplatte
- 420: Bipolarplatte
- 454: Kathodendichtung
- 458: Kathodendichtung
- 446: Gasdurchtrittsöffnung
- 462: Gasdurchtrittsöffnung
- 478: Gasdurchtrittsöffnung
- 480: Gasdurchtrittsöffnung
- 482: Gasdurchtrittsöffnung
- 484: Gasdurchtrittsöffnung
- 492: Oberflächenrand
- 494: Kühlkörper-Oberflächenabschnitt
- 501: Brennstoffzellenstapel
- 502: Brennstoffzellenstapel
- 503: Brennstoffzellenstapel
- 504: Brennstoffzellenstapel
- 505: Brennstoffzellenstapel
- 506: Brennstoffzellenstapel
- 601: Brennstoffzellenstapel
- 602: Brennstoffzellenstapel
- 603: Brennstoffzellenstapel
- 604: Brennstoffzellenstapel
- 605: Brennstoffzellenstapel
- 606: Brennstoffzellenstapel

## Patentansprüche

1. Multi-Brennstoffzellenstapel-Anordnung mit einer Mehrzahl von Brennstoffzellenstapeln (501-506; 601-606), wobei jeder Brennstoffzellenstapel zumindest eine Wiederholeinheit (10, 12; 310, 312; 410; 412) umfasst und die zumindest eine Wiederholeinheit (10, 12; 310, 312; 410; 412) jedes Brennstoffzellenstapels ein Kathoden-Flow-Field aufweist, das von einer Dichtung (54, 58; 354, 358; 454, 458) umgeben ist, wobei innerhalb der Dichtung (54, 58; 354, 358; 454, 458) zumindest eine Kathodenluftzuführung zum Zuführen von Kathodenzuluft oder eine Kathodenluftabführung zum Abführen von Kathodenabluft vorgesehen ist, wobei die Dichtung (54, 58; 354, 358; 454, 458) in ihrem Umfangsbereich zumindest einen definierten Undichtigkeitsbereich (201-204; 301-306; 401-404) aufweist, durch den zusätzlich Kathodenluft zu- oder abgeführt werden kann, **dadurch gekennzeichnet, dass** zumindest zwei definierte Undichtigkeitsbereiche von benachbarten Brennstoffzellenstapeln so miteinander ausgerichtet sind, dass aus dem einen Brennstoffzellenstapel über den einen definierten Undichtigkeitsbereich austretende Kathodenluft dem anderen Brennstoffzellenstapel über den anderen definierten Undichtigkeitsbereich zugeführt werden kann.

2. Multi-Brennstoffzellenstapel-Anordnung nach Anspruch 1, **dadurch gekennzeichnet, dass** die aus dem einen Brennstoffzellenstapel über den einen definierten Undichtigkeitsbereich austretende Kathodenluft dem anderen Brennstoffzellenstapel über einen Bereich zugeführt werden kann, der mit einer Frischluftquelle in Verbindung steht.

3. Multi-Brennstoffzellenstapel-Anordnung nach Anspruch 1 oder 2, **dadurch gekennzeichnet, dass** die Wiederholeinheit (10, 12; 310, 312; 410; 412) jedes Brennstoffzellenstapels zwei sich gegenüberliegende definierte Undichtigkeitsbereiche (201, 202; 203, 204; 401, 403; 402, 404) zum Abführen von Kathodenabluft aufweist.

4. Multi-Brennstoffzellenstapel-Anordnung nach einem der Ansprüche 1 bis 3, **dadurch gekennzeichnet, dass** die Wiederholeinheit (10, 12; 310, 312; 410; 412) jedes Brennstoffzellenstapels zwei sich gegenüberliegende definierte Undichtigkeitsbereiche (301, 303; 302, 304) zum Zuführen von Kathodenzuluft aufweist.

## Claims

1. A multi fuel cell stack arrangement, comprising a plurality of fuel cell stacks (501-506; 601-606), wherein each fuel cell stack comprises at least one repeat unit (10, 12; 310, 312; 410, 412) and the at least one repeat unit (10, 12; 310, 312; 410, 412) of each fuel cell stack comprises a cathode flow field surrounded by a seal (54, 58; 354, 358; 454, 458), wherein at least one cathode air inlet for supplying incoming cathode air or a cathode air outlet for removing discharged cathode air is provided within the seal (54, 58; 354, 358; 454, 458), wherein the seal (54, 58; 354, 358; 454, 458) comprises, within its perimeter region, at least one defined permeability region (201-204; 301-306; 401-404) through which additional cathode air can be supplied or removed, **characterized in that** at least two defined permeability regions of adjacent fuel cell stacks are aligned with each other in such a way that cathode air exiting the one fuel cell stack via the one permeability region can be supplied to the other fuel cell stack via the other defined permeability region.

2. The multi fuel cell stack arrangement as claimed in claim 1, **characterized in that** the cathode air exiting from the one fuel cell stack via the one defined permeability region can be supplied to the other fuel cell stack via a region connected to a source of fresh air.

3. The multi fuel cell stack arrangement as claimed in claim 1 or claim 2, **characterized in that** the repeat unit (10, 12; 310, 312; 410, 412) of each fuel cell stack comprises two defined permeability regions (201, 202; 203, 204; 401, 403; 402, 404) opposite to each other, for removing discharged cathode air.

4. The multi fuel cell stack arrangement as claimed in one of claims 1 to 3, **characterized in that** the repeat unit (10, 12; 310, 312; 410, 412) of each fuel cell stack comprises two defined permeability regions (301, 303; 302, 304) opposite to each other, for supplying incoming cathode air.

## Revendications

1. Agencement multi-empilement de piles à combustible, comportant plusieurs empilements de piles à combustible (501-506; 601-606), chaque empilement comportant au moins une unité répétitive (10, 12; 310, 312; 410; 412), la ou les unités répétitives (10, 12; 310, 312; 410; 412) de chaque empilement comportant un champ d'écoulement cathodique, qui est entouré d'un joint (54, 58; 354, 358; 454, 358), au moins une amenée d'air cathodique pour amener de l'air cathodique d'entrée ou une sortie d'air cathodique pour extraire de l'air cathodique de sortie étant prévues dans le joint (54, 58; 354, 358; 454, 458), le joint (54, 58; 354, 358; 454, 458) comportant dans sa zone périmétrale au moins une zone définie de perméabilité (201-204; 301-306; 401-404), au travers laquelle de l'air cathodique peut être amené ou extrait de façon supplémentaire, **caractérisé en ce qu'**au moins deux zones définies de perméabilité appartenant à des empilements voisins sont alignées l'une avec l'autre tel que de l'air cathodique sortant de l'un des empilements à travers la zone définie de perméabilité peut être amené à l'autre empilement à travers l'autre zone définie de perméabilité

2. Agencement multi-empilement selon la revendication 1, **caractérisé en ce que** l'air cathodique sortant de l'un des empilements à travers la zone définie de perméabilité peut être amené à l'autre empilement à travers une zone qui est liée à une source d'air frais.

3. Agencement multi-empilement selon la revendication 1 ou 2, **caractérisé en ce que** l'unité répétitive (10, 12; 310, 312; 410, 412) de chaque empilement comporte deux zones définies de perméabilité (201, 202; 203, 204; 401, 403; 402, 404), qui sont en face l'une de l'autre, pour extraire de l'air cathodique.

4. Agencement multi-empilement selon l'une des revendications 1 à 3, **caractérisé en ce que** l'unité répétitive (10, 12; 310, 312; 410, 412) de chaque empilement comporte deux zones définies de perméabilité (301, 303; 302, 304), qui sont en face l'une de l'autre, pour amener de l'air cathodique.
